# EUROPEAN PATENT APPLICATION

(11) **EP 3 723 411 A1**
(43) Date of publication of application: **14.10.2020**
(21) Application number: 19746832.5
(22) Date of filing: 21.01.2019
(51) Int. Cl.: H04W 28/16

(54) **QUALITY-OF-SERVICE CONTROL METHOD AND RELATED APPARATUS**

(30) Priority: 30.01.2018 CN 201810100138
(71) Applicant: HUAWEI TECHNOLOGIES CO., LTD., Shenzhen, Guangdong 518129 (CN); Tsinghua University, Beijing 100084 (CN)
(72) Inventor: YAN, Huan, Beijing 100084 (CN); LI, Yong, Beijing 100084 (CN); CAO, Longyu, Shenzhen, Guangdong 518129 (CN); JIN, Depeng, Beijing 100084 (CN)
(74) Representative: Körber, Martin Hans
(86) International application number: PCT/CN2019/072540
(87) International publication number: WO 2019/149106

(57) **Abstract**

Embodiments of the present invention provide a quality of service QoS control method and a related device. The method is implemented based on an OpenFlow protocol and includes: sending, by a switch, header information of a first data packet to an SDN controller; receiving, by the switch, a quality of service flow table sent by the SDN controller, where the quality of service flow table is used to indicate a QoS class of a first service to which the first data packet belongs and an execution queue of the first service, and a bit rate upper limit is set for the execution queue of the first service; and forwarding, by the switch, a data packet of the first service based on a QoS class identifier and the execution queue. According to the embodiments of the present invention, efficiency of QoS control can be improved.

## Description

### TECHNICAL FIELD

The present invention relates to the field of communications technologies, and in particular, to a quality of service QoS control method and a related device.

### BACKGROUND

Quality of service (Quality of Service, QoS) control refers to allocating corresponding network resources or use priorities to different users or services, so that a telecommunications operator provides differentiated network services for users. The QoS control is mainly to request a required network service by using an upper-layer application of a network system, and then transfer requested information to a corresponding execution point in the network for resource scheduling and allocation, to implement corresponding QoS control for different users or services. An evolved packet system (Evolved Packet System, EPS) bearer is a basic tool for performing the QoS control. Each EPS bearer is associated with a group of QoS parameters, and all data flows transmitted by using a same EPS bearer are subject to same QoS processing.

Currently, a QoS control mechanism based on the evolved packet system (Evolved Packet System, EPS) bearer is commonly used. A specific principle is that an uplink packet filter (UL-TFT) of user equipment (User Equipment, UE) and a downlink packet filter (DL-TFT) of a gateway (GateWay) respectively map an uplink service data flow and a downlink service data flow to a specific EPS bearer. An uplink EPS bearer is used as an example. The UE first binds an uplink service data flow to one EPS bearer by using the UL-TFT. Then, the UE implements a one-to-one mapping between the UL-TFT and a radio bearer by creating a binding between the service data flow and the radio bearer. Abase station (eNodeB, eNB) implements a one-to-one mapping between the radio bearer and an S1 bearer by creating a binding between the radio bearer and the S1 bearer. A serving gateway (S-GW) implements a one-to-one mapping between the S1 bearer and an S5/S8 bearer by creating a binding between the S1 bearer and the S5/S8 bearer. Finally, an EPS bearer implements one-to-one mappings among the packet filter, the radio bearer, the S 1 bearer, and the S5/S8 bearer by cascading the radio bearer, the S1 bearer, and the S5/S8 bearer. A mapping procedure of a downlink EPS bearer is a reverse process of the mapping procedure of the uplink EPS bearer. Details are not described herein again.

Because a multi-level mapping relationship needs to be established to map the service data flow to the EPS bearer, efficiency of the QoS control is relatively low.

### SUMMARY

Embodiments of the present invention disclose a quality of service QoS control method and a related device, to improve QoS control efficiency.

According to a first aspect, an embodiment of the present invention discloses a quality of service QoS control method, where the method is implemented based on an OpenFlow protocol, and includes:
sending, by a switch, header information of a first data packet to an SDN controller;
receive, by the switch, a quality of service flow table sent by the SDN controller, where the quality of service flow table is used to indicate a QoS class of a first service to which the first data packet belongs and an execution queue of the first service, and a bit rate upper limit is set for the execution queue of the first service; and
forwarding, by the switch, a data packet of the first service based on a QoS class identifier and the execution queue.

In the foregoing method, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

With reference to the first aspect, in a first possible implementation of the first aspect, if QoS of the first service requires a maximum bit rate MBR, a bit rate includes the MBR; a match field of the quality of service flow table includes a source address and a destination address of the header information, and an action field of the quality of service flow table includes the QoS class identifier QCI of the first service and an identifier of the execution queue of the first service.

With reference to the first aspect, or any one of the possible implementations of the first aspect, in a second possible implementation of the first aspect, if the QoS of the first service requires a guaranteed bit rate GBR, the bit rate includes the GBR; the quality of service flow table includes a multi-flow table that consists of a first flow table, a second flow table, and a third flow table, where a match field of the first flow table includes the source address and the destination address of the header information, and an action field of the first flow table includes the QoS class identifier QCI of the first service; a match field of the second flow table includes the source address and the destination address of the header information, and an action field of the second flow table includes a meter identifier; and a match field of the third flow table includes an execution priority, a differentiated services code point DSCP, and the source address and the destination address of the header information, and an action field of the third flow table includes the identifier of the execution queue of the first service.

With reference to the first aspect, or any one of the possible implementations of the first aspect, in a third possible implementation of the first aspect, the third flow table includes a first entry and a second entry, where a priority recorded in the first entry is higher than a priority recorded in the second entry, a DSCP value recorded in the second entry is a DSCP value other than a DSCP value recorded in the first entry, both the first entry and the second entry record the source address and the destination address of the header information, an execution queue identifier in the first entry is different from an execution queue identifier in the second entry, and a bit rate upper limit of an execution queue represented by the execution queue identifier in the first entry is set to the GBR.

With reference to the first aspect or any one of the possible implementations of the first aspect, in the second possible implementation of the first aspect, if the QoS of the first service requires both the GBR and the MBR, a bit rate upper limit of an execution queue represented by the execution queue identifier in the second entry is set to a difference between the MBR and the GBR.

According to a second aspect, an embodiment of this application provides a quality of service QoS control method, where the method is implemented based on an OpenFlow protocol, and includes:
sending, by an SDN controller, a first request message to a control plane gateway based on header information of a first data packet sent by a switch, to request a quality of service QoS parameter of a first service to which the first data packet belongs, where the QoS parameter includes a quality of service class identifier QCI and bit rate information;
receiving, by the SDN controller, the QoS parameter that is required by the first service and that is sent by the control plane gateway;
sending, by the SDN controller, the QoS parameter required by the first service to a QoS processing network element, so that the QoS processing network element generates a quality of service flow table, where the quality of service flow table is used to indicate a QoS class of the first service and an execution queue of the first service, and a bit rate upper limit is set for the execution queue of the first service;
receiving, by the SDN controller, the quality of service flow table sent by the QoS processing network element; and
creating, by the SDN controller, the execution queue, and sending the quality of service flow table to the switch, so that the switch forwards a data packet of the first service based on the quality of service flow table.

In the foregoing method, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

With reference to the second aspect, in a first possible implementation of the second aspect, if QoS of the first service requires a maximum bit rate MBR, a bit rate includes the MBR; a match field of the quality of service flow table includes a source address and a destination address of the header information, and an action field of the quality of service flow table includes the QoS class identifier QCI of the first service and an identifier of the execution queue of the first service.

With reference to the second aspect, or any one of the possible implementations of the second aspect, in a second possible implementation of the second aspect, if the QoS of the first service requires a guaranteed bit rate GBR, the bit rate includes the GBR, and the quality of service flow table includes a multi-flow table that consists of a first flow table, a second flow table, and a third flow table, where a match field of the first flow table includes the source address and the destination address of the header information, and an action field of the first flow table includes the QoS class identifier QCI of the first service; a match field of the second flow table includes the source address and the destination address of the header information, and an action field of the second flow table includes a meter identifier; and a match field of the third flow table includes an execution priority, a DSCP, and the source address and the destination address of the header information, and an action field of the third flow table includes the identifier of the execution queue of the first service.

With reference to the second aspect, or any one of the possible implementations of the second aspect, in a third possible implementation of the second aspect, the third flow table includes a first entry and a second entry, where a priority recorded in the first entry is higher than a priority recorded in the second entry, a DSCP value recorded in the second entry is a differentiated services code point DSCP value other than a DSCP value recorded in the first entry, and both the first entry and the second entry record the source address and the destination address of the header information, an execution queue identifier in the first entry is different from an execution queue identifier in the second entry, and a bit rate upper limit of an execution queue represented by the execution queue identifier in the first entry is set to the GBR.

With reference to the second aspect or any one of the possible implementations of the second aspect, in a fourth possible implementation of the second aspect, if the QoS of the first service requires both the GBR and the MBR, a bit rate upper limit of an execution queue represented by the execution queue identifier in the second entry is set to a difference between the MBR and the GBR.

According to a third aspect, an embodiment of this application provides a quality of service QoS control method, where the method is implemented based on an OpenFlow protocol, and includes:
receiving, by a QoS processing network element, a quality of service QoS parameter that is required by a first service and that is sent by an SDN controller, where the QoS parameter includes a quality of service class identifier QCI and bit rate information;
generating, by the QoS processing network element, a quality of service flow table based on the QoS parameter, where the quality of service flow table is used to indicate a QoS class of the first service and an execution queue of the first service, and a bit rate upper limit is set for the execution queue of the first service; and
sending, by the QoS processing network element, the quality of service flow table to the SDN controller, so that the SDN controller forwards the quality of service flow table to a switch, where the quality of service flow table is used by the switch to forward a data packet of the first service based on the quality of service flow table.

In the foregoing method, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

With reference to the third aspect, in a first possible implementation of the third aspect, if QoS of the first service requires a maximum bit rate MBR, a bit rate includes the MBR; a match field of the quality of service flow table includes a source address and a destination address of the header information, and an action field of the quality of service flow table includes the QoS class identifier QCI of the first service and an identifier of the execution queue of the first service.

With reference to the third aspect, or any one of the possible implementations of the third aspect, in a second possible implementation of the third aspect, if the QoS of the first service requires a guaranteed bit rate GBR, the bit rate includes the GBR; the quality of service flow table includes a multi-flow table that consists of a first flow table, a second flow table, and a third flow table, where a match field of the first flow table includes the source address and the destination address of the header information, and an action field of the first flow table includes the QoS class identifier QCI of the first service; a match field of the second flow table includes the source address and the destination address of the header information, and an action field of the second flow table includes a meter identifier; and a match field of the third flow table includes an execution priority, a DSCP, and the source address and the destination address of the header information, and an action field of the third flow table includes the identifier of the execution queue of the first service.

With reference to the third aspect, or any one of the possible implementations of the third aspect, in a third possible implementation of the third aspect, the third flow table includes a first entry and a second entry, where a priority recorded in the first entry is higher than a priority recorded in the second entry, a DSCP value recorded in the second entry is a differentiated services code point DSCP value other than a DSCP value recorded in the first entry, both the first entry and the second entry record the source address and the destination address of the header information, an execution queue identifier in the first entry is different from an execution queue identifier in the second entry, and a bit rate upper limit of an execution queue represented by the execution queue identifier in the first entry is set to the GBR.

With reference to the third aspect or any one of the possible implementations of the third aspect, in a fourth possible implementation of the third aspect, if the QoS of the first service requires both the GBR and the MBR, a bit rate upper limit of an execution queue represented by the execution queue identifier in the second entry is set to a difference between the MBR and the GBR.

According to a fourth aspect, an embodiment of this application provides a switch, where the switch is implemented based on an OpenFlow protocol, and the switch includes a processor, a memory, and a transceiver. The memory is configured to store a program instruction, and the processor is configured to invoke the program instruction to perform the following operations:
sending, by using the transceiver, header information of a first data packet to an SDN controller;
receiving, by using the transceiver, a quality of service flow table sent by the SDN controller, where the quality of service flow table is used to indicate a QoS class of a first service to which the first data packet belongs and an execution queue of the first service, and a bit rate upper limit is set for the execution queue of the first service; and
forwarding a data packet of the first service based on a QoS class identifier and the execution queue.

In the foregoing method, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

With reference to the fourth aspect, in a first possible implementation of the fourth aspect, if QoS of the first service requires a maximum bit rate MBR, a bit rate includes the MBR; a match field of the quality of service flow table includes a source address and a destination address of the header information, and an action field of the quality of service flow table includes the QoS class identifier QCI of the first service and an identifier of the execution queue of the first service.

With reference to the fourth aspect, or any one of the possible implementations of the fourth aspect, in a second possible implementation of the fourth aspect, if the QoS of the first service requires a guaranteed bit rate GBR, the bit rate includes the GBR; the quality of service flow table includes a multi-flow table that consists of a first flow table, a second flow table, and a third flow table, where a match field of the first flow table includes the source address and the destination address of the header information, and an action field of the first flow table includes the QoS class identifier QCI of the first service; a match field of the second flow table includes the source address and the destination address of the header information, and an action field of the second flow table includes a meter identifier; and a match field of the third flow table includes an execution priority, a differentiated services code point DSCP, and the source address and the destination address of the header information, and an action field of the third flow table includes the identifier of the execution queue of the first service.

With reference to the fourth aspect, or any one of the possible implementations of the fourth aspect, in a third possible implementation of the fourth aspect, the third flow table includes a first entry and a second entry, where a priority recorded in the first entry is higher than a priority recorded in the second entry, a DSCP value recorded in the second entry is a DSCP value other than a DSCP value recorded in the first entry, both the first entry and the second entry record the source address and the destination address of the header information, an execution queue identifier in the first entry is different from an execution queue identifier in the second entry, and a bit rate upper limit of an execution queue represented by the execution queue identifier in the first entry is set to the GBR.

With reference to the fourth aspect or any one of the possible implementations of the fourth aspect, in the second possible implementation of the fourth aspect, if the QoS of the first service requires both the GBR and the MBR, a bit rate upper limit of an execution queue represented by the execution queue identifier in the second entry is set to a difference between the MBR and the GBR.

According to a fifth aspect, an embodiment of this application provides an SDN controller, where the SDN controller is implemented based on an OpenFlow protocol, and the SDN controller includes a processor, a memory, and a transceiver. The memory is configured to store a program instruction, and the processor is configured to invoke the program instruction to perform the following operations:
sending, by using the transceiver, a first request message to a control plane gateway based on header information of a first data packet sent by a switch, to request a quality of service QoS parameter of a first service to which the first data packet belongs, where the QoS parameter includes a quality of service class identifier QCI and bit rate information;
receiving, by using the transceiver, the QoS parameter that is required by the first service and that is sent by the control plane gateway;
sending, by using the transceiver, the QoS parameter required by the first service to a QoS processing network element, so that the QoS processing network element generates a quality of service flow table, where the quality of service flow table is used to indicate a QoS class of the first service and an execution queue of the first service, and a bit rate upper limit is set for the execution queue of the first service;
receiving, by using the transceiver, the quality of service flow table sent by the QoS processing network element; and
creating the execution queue and sending the quality of service flow table to the switch, so that the switch forwards a data packet of the first service based on the quality of service flow table.

In the foregoing method, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

With reference to the fifth aspect, in a first possible implementation of the fifth aspect, if QoS of the first service requires a maximum bit rate MBR, a bit rate includes the MBR; a match field of the quality of service flow table includes a source address and a destination address of the header information, and an action field of the quality of service flow table includes the QoS class identifier QCI of the first service and an identifier of the execution queue of the first service.

With reference to the fifth aspect, or any one of the possible implementations of the fifth aspect, in a second possible implementation of the fifth aspect, if the QoS of the first service requires a guaranteed bit rate GBR, the bit rate includes the GBR, and the quality of service flow table includes a multi-flow table that consists of a first flow table, a second flow table, and a third flow table, where a match field of the first flow table includes the source address and the destination address of the header information, and an action field of the first flow table includes the QoS class identifier QCI of the first service; a match field of the second flow table includes the source address and the destination address of the header information, and an action field of the second flow table includes a meter identifier; and a match field of the third flow table includes an execution priority, a DSCP, and the source address and the destination address of the header information, and an action field of the third flow table includes the identifier of the execution queue of the first service.

With reference to the fifth aspect, or any one of the possible implementations of the fifth aspect, in a third possible implementation of the fifth aspect, the third flow table includes a first entry and a second entry, where a priority recorded in the first entry is higher than a priority recorded in the second entry, a DSCP value recorded in the second entry is a differentiated services code point DSCP value other than a DSCP value recorded in the first entry, and both the first entry and the second entry record the source address and the destination address of the header information, an execution queue identifier in the first entry is different from an execution queue identifier in the second entry, and a bit rate upper limit of an execution queue represented by the execution queue identifier in the first entry is set to the GBR.

With reference to the fifth aspect or any one of the possible implementations of the fifth aspect, in a fourth possible implementation of the fifth aspect, if the QoS of the first service requires both the GBR and the MBR, a bit rate upper limit of an execution queue represented by the execution queue identifier in the second entry is set to a difference between the MBR and the GBR.

According to a sixth aspect, an embodiment of this application provides a QoS processing network element, where the QoS processing network element is implemented based on an OpenFlow protocol, and the QoS processing network element includes a processor, a memory, and a transceiver. The memory is configured to store a program instruction, and the processor is configured to invoke the program instruction to perform the following operations:
receiving, by using the transceiver, a quality of service QoS parameter that is required by a first service and that is sent by an SDN controller, where the QoS parameter includes a quality of service class identifier QCI and bit rate information;
generating a quality of service flow table based on the QoS parameter, where the quality of service flow table is used to indicate a QoS class of the first service and an execution queue of the first service, and a bit rate upper limit is set for the execution queue of the first service; and
sending, by using the transceiver, the quality of service flow table to the SDN controller, so that the SDN controller forwards the quality of service flow table to a switch, where the quality of service flow table is used by the switch to forward a data packet of the first service based on the quality of service flow table.

In the foregoing method, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

With reference to the sixth aspect, in a first possible implementation of the sixth aspect, if QoS of the first service requires a maximum bit rate MBR, a bit rate includes the MBR; a match field of the quality of service flow table includes a source address and a destination address of the header information, and an action field of the quality of service flow table includes the QoS class identifier QCI of the first service and an identifier of the execution queue of the first service.

With reference to the sixth aspect, or any one of the possible implementations of the sixth aspect, in a second possible implementation of the sixth aspect, if the QoS of the first service requires a guaranteed bit rate GBR, the bit rate includes the GBR; the quality of service flow table includes a multi-flow table that consists of a first flow table, a second flow table, and a third flow table, where a match field of the first flow table includes the source address and the destination address of the header information, and an action field of the first flow table includes the QoS class identifier QCI of the first service; a match field of the second flow table includes the source address and the destination address of the header information, and an action field of the second flow table includes a meter identifier; and a match field of the third flow table includes an execution priority, a DSCP, and the source address and the destination address of the header information, and an action field of the third flow table includes the identifier of the execution queue of the first service.

With reference to the sixth aspect, or any one of the possible implementations of the sixth aspect, in a third possible implementation of the sixth aspect, the third flow table includes a first entry and a second entry, where a priority recorded in the first entry is higher than a priority recorded in the second entry, a DSCP value recorded in the second entry is a differentiated services code point DSCP value other than a DSCP value recorded in the first entry, both the first entry and the second entry record the source address and the destination address of the header information, an execution queue identifier in the first entry is different from an execution queue identifier in the second entry, and a bit rate upper limit of an execution queue represented by the execution queue identifier in the first entry is set to the GBR.

With reference to the sixth aspect or any one of the possible implementations of the sixth aspect, in a fourth possible implementation of the sixth aspect, if the QoS of the first service requires both the GBR and the MBR, a bit rate upper limit of an execution queue represented by the execution queue identifier in the second entry is set to a difference between the MBR and the GBR.

According to a seventh aspect, an embodiment of the present invention provides a switch, where the switch includes units configured to perform the method according to the first aspect or any one of the possible implementations of the first aspect.

According to an eighth aspect, an embodiment of the present invention provides an SDN controller, where the SDN controller includes units configured to perform the method according to the second aspect or any one of the possible implementations of the second aspect.

According to a ninth aspect, an embodiment of the present invention provides a QoS processing network element, where the QoS processing network element includes units configured to perform the method according to the third aspect or any one of the possible implementations of the third aspect.

According to a tenth aspect, an embodiment of the present invention provides a computer-readable storage medium, where the computer-readable storage medium is configured to store a program instruction, and when the program instruction is executed by a processor, the method according to the first aspect or any one of the possible implementations of the first aspect, or the second aspect or any one of the possible implementations of the second aspect, or the third aspect or any one of the possible implementations of the third aspect is implemented.

In the embodiments of the present invention, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

### BRIEF DESCRIPTION OF DRAWINGS

The following describes the accompanying drawings used in the embodiments of the present invention.
FIG. 1 is a schematic architectural diagram of a communications system according to an embodiment of the present invention;
FIG. 2 is a schematic flowchart of a quality of service control method according to an embodiment of the present invention;
FIG. 3 is a schematic flowchart of another quality of service control method according to an embodiment of the present invention;
FIG. 4 is a schematic flowchart of another quality of service control method according to an embodiment of the present invention;
FIG. 5 is a schematic structural diagram of a switch according to an embodiment of the present invention;
FIG. 6 is a schematic structural diagram of an SDN controller according to an embodiment of the present invention;
FIG. 7 is a schematic structural diagram of a QoS processing network element according to an embodiment of the present invention;
FIG. 8 is a schematic structural diagram of another switch according to an embodiment of the present invention;
FIG. 9 is a schematic structural diagram of another SDN controller according to an embodiment of the present invention; and
FIG. 10 is a schematic structural diagram of another QoS processing network element according to an embodiment of the present invention.

### DESCRIPTION OF EMBODIMENTS

The following describes the embodiments of the present invention with reference to the accompanying drawings in the embodiments of the present invention.

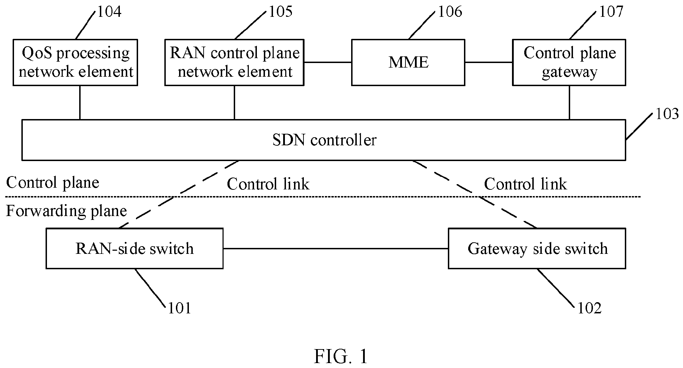

FIG. 1 is a schematic structural diagram of a communications system according to an embodiment of the present invention. The communications system includes an OpenFlow switch (including a switch 101 deployed on a RAN side and a switch 102 deployed on a gateway side), an SDN controller 103, a QoS processing network element 104, a RAN control plane network element 105, a mobility management entity (Mobile Management Entity, MME) 106, and a gateway control plane network element 107 that are connected to each other. The RAN-side switch 101 and the gateway side switch 102 are responsible for processing and forwarding a service packet of a user based on a flow table. The SDN controller 103 is responsible for managing a processing rule of a data packet, and forwarding the flow table and a related configuration by using a control link between the SDN controller 103 and a switch. The QoS processing network element 104 is responsible for generating a flow table and configuration information that are required for a service flow and QoS information. The RAN control plane network element 105 is responsible for broadcasting, paging, radio resource control connection management, radio bearer control, mobility management, user equipment measurement report and control, and the like. The MME 106 is responsible for mobility management. The gateway control plane network element 107 is responsible for selecting a suitable gateway to forward uplink and downlink data.

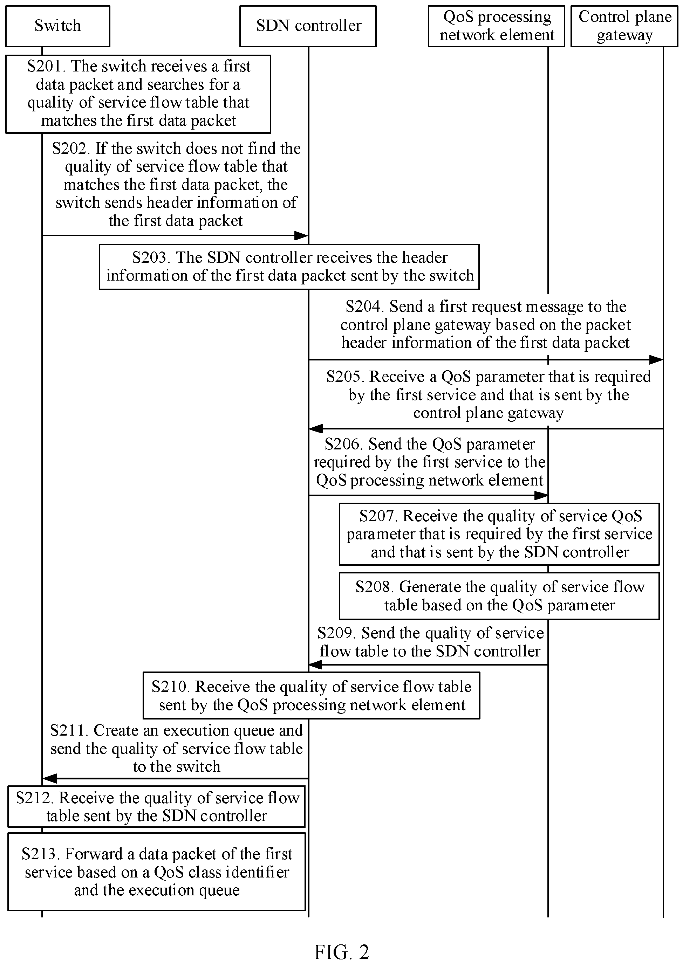

FIG. 2 shows a quality of service control method according to an embodiment of the present invention. The method may be implemented based on the communications system shown in FIG. 1. The method includes but is not limited to the following steps.

Step S201. A switch receives a first data packet and searches for a quality of service flow table that matches the first data packet.

Specifically, the switch may be a radio access network (Radio Access Network, RAN) side switch, or may be a gateway side switch. The first data packet is a data packet received by the switch. After receiving the first data packet, the switch needs to determine how to forward the first data packet. For example, the switch determines a QoS parameter that generates a flow table based on which the first data packet is forwarded. The QoS parameter may include at least one of a QoS class identifier (QoS Class Indicator, QCI), a guaranteed bit rate (Guaranteed Bit Rate, GBR), a maximum bit rate (Maximum Bit Rate, MBR), and an aggregate maximum bit rate (Aggregate Maximum Bit Rate, AMBR), or may include another parameter.

The quality of service flow table herein is a flow table that indicates these QoS parameters. Therefore, the switch needs to determine whether the switch has a quality of service flow table that matches the first data packet. If the switch has the quality of service flow table that matches the first data packet, the switch may directly determine, based on the existing quality of service flow table, a QoS parameter based on which the first data packet is forwarded; and if the switch does not have the quality of service flow table that matches the first data packet, a subsequent procedure is performed.

Step S202. If the switch does not find the quality of service flow table that matches the first data packet, the switch sends header information of the first data packet to an SDN controller.

Specifically, the switch may send a Packet-in message to the SDN controller, where the Packet-in message includes the header information of the first data packet. For example, the header information may include a destination address, a source address, a protocol type, a port number, and the like.

Step S203. The SDN controller receives the header information of the first data packet sent by the switch.

Step S204. The SDN controller sends a first request message to a control plane gateway based on the header information of the first data packet sent by the switch, to request a quality of service QoS parameter of a first service to which the first data packet belongs.

Specifically, QoS parameters of different services may be the same or may be different, and a QoS parameter of each service is recorded in a policy control and charging rules function unit (Policy and Charging Rules Function, PCRF). The control plane gateway may also identify, based on a message carried in the first request message, that the SDN controller is requesting the QoS parameter of the first service. Therefore, the control plane gateway obtains the QoS parameter of the first service from a PCRF connected to the control plane gateway. In addition, the QoS parameter includes information such as a quality of service class identifier QCI and bit rate information. The bit rate information may include at least one of the MBR, the GBR, and the AMBR.

Step S205. The SDN controller receives the QoS parameter that is required by the first service and that is sent by the control plane gateway.

Step S206. The SDN controller sends the QoS parameter required by the first service to a QoS processing network element.

Specifically, in addition to sending the QoS parameter required by the first service to the QoS processing network element, the SDN controller may further send the header information of the first data packet to the QoS processing network element, to generate the quality of service flow table.

Step S207. The QoS processing network element receives the quality of service QoS parameter that is required by the first service and that is sent by the SDN controller.

Step S208. The QoS processing network element generates the quality of service flow table based on the QoS parameter.

Specifically, the QoS processing network element obtains related configuration information required for generating the quality of service flow table based on the quality of service QoS parameter required by the first service. The related configuration information may be preconfigured by a network administrator by using an external interface of the QoS processing network element. In addition, the quality of service flow table is used to indicate QoS of the first service and an execution queue of the first service, and an upper bit rate limit is set for the execution queue of the first service.

In an optional solution, the QoS processing network element first generates a quality of service flow table for each of the QCI and the bit rate information in the QoS parameter. The quality of service flow table generated for the QCI in the QoS parameter is used to indicate the QCI, and the quality of service flow table generated for the bit rate information in the QoS parameter is at least used to indicate the execution queue that executes the first service. Then, the QoS processes the generated plurality of quality of service flow tables by using the following rules.

Rule 1: If the bit rate information includes both the GBR and the MBR, a quality of service flow table is generated for the GBR but no quality of service flow table is generated for the MBR, and in two execution queues indicated by an action field of the quality of service flow table generated for the GBR, a bit rate upper limit of an execution queue with a higher priority is set to the GBR, and a bit rate upper limit of an execution queue with a lower priority is set to a difference between the MBR and the GBR.

Rule 2: If there is only one quality of service flow table generated for each QCI parameter, and match fields of quality of service flow tables generated for different QoS parameters are the same, the quality of service flow tables generated for the different QoS parameters are combined into one quality of service flow table. An action field of the quality of service flow table is a set of action fields of all the quality of service flow tables, and an action of setting an execution queue is placed at the end of the set.

It should be noted that a priority of Rule 1 is higher than that of Rule 2, that is, Rule 1 is executed before Rule 2 is executed. Based on the foregoing two rules, the following two possible cases may be obtained.
Case 1: If QoS of the first service requires a maximum bit rate MBR, a bit rate includes the MBR; a match field of the quality of service flow table includes a source address and a destination address of the header information, and an action field of the quality of service flow table includes the QoS class identifier QCI of the first service and an identifier of the execution queue of the first service. For example, the quality of service flow table is shown in Table 1, where "QCI 2" indicates that the QCI is 2, and "Set-Queue 5" indicates that the identifier of the execution queue is 5.

**Table 1**

| Match Field | | Processing Action |
|---|---|---|
| Source IP address | Target IP address | |
| 101.224.112.10 | 126.136.134.20 | QCI 2 |
| | | Set-Queue 5 |

Case 2: If the QoS of the first service requires a guaranteed bit rate GBR, the bit rate includes the GBR; the quality of service flow table includes a multi-flow table that consists of a first flow table, a second flow table, and a third flow table, where the multi-flow table may be connected by using a goto table function; a match field of the first flow table includes the source address and the destination address of the header information, and an action field of the first flow table includes the QoS class identifier QCI of the first service; a match field of the second flow table includes the source address and the destination address of the header information, and an action field of the second flow table includes a meter identifier; and a match field of the third flow table includes an execution priority, a differentiated services code point DSCP, and the source address and the destination address of the header information, and an action field of the third flow table includes the identifier of the execution queue of the first service. For example, the first flow table is shown in Table 0, the second flow table is shown in Table i, and the third flow table is shown in Table i+1.

**Table 0**

| Match Field | | Processing Action |
|---|---|---|
| Source IP address | Target IP address | |
| 101.224.112.10 | 126.136.134.20 | QCI 2 |
| | | Goto table i |

In Table 0, "QCI 2" indicates that the QCI is 2, and "Goto table i" indicates that Table (flow table) i is to be executed.

**Table i**

| Match Field | | Processing Action |
|---|---|---|
| Source IP address | Target IP address | |
| 101.224.112.10 | 126.136.134.20 | Meter 3 |
| | | Goto Table (i+1) |

In Table i, "Meter 3" indicates that an identifier of a meter (meter) is 3, and "Goto Table (i+1)" indicates that Flow table i+1 is to be executed.

**Table i+1**

| Match Field | | | | Processing Action |
|---|---|---|---|---|
| Priority | DSCP | Source IP Address | Destination IP Address | |
| 10 | 12 | 101.224.112.10 | 126.136.134.20 | Set-Queue 2 |
| 6 | * | 101.224.112.10 | 126.136.134.20 | Set-Queue 7 |

Specifically, Table i+1 (that is, the third flow table) includes a first entry and a second entry, where a priority (a priority value is 10) recorded in the first entry is higher than a priority (a priority value is 6) recorded in the second entry, a DSCP value recorded in the second entry is a DSCP value (represented by *) other than the DSCP value recorded in the first entry, both the first entry and the second entry record the source address and the destination address of the header information, an execution queue identifier (which is 2) in the first entry is different from an execution queue identifier (which is 7) in the second entry, and a bit rate upper limit of an execution queue indicated by the execution queue identifier in the first entry is set to the GBR.

Further, if the QoS of the first service requires both the GBR and the MBR, a bit rate upper limit of an execution queue represented by the execution queue identifier in the second entry is set to a difference between the MBR and the GBR.

Step S209. The QoS processing network element sends the quality of service flow table to the SDN controller.

Specifically, in addition to sending the quality of service flow table to the SDN controller, the QoS processing network element further sends, to the SDN controller, information about an execution point of the quality of service flow table (in the scenario of this application, the execution point is the switch), and information about the execution queue indicated in an action field of the quality of service flow table.

Step S210. The SDN controller receives the quality of service flow table sent by the QoS processing network element.

Step S211. The SDN controller creates the execution queue and sends the quality of service flow table to the switch.

Specifically, the SDN controller further receives the information about the execution point and the information about the execution queue, and creates the execution queue based on the information about the execution queue. For example, if the identifier that is of the execution queue of the first service and that is included in the action field of the quality of service flow table is 5, the SDN controller creates a queue of which an identifier (ID) is 5 to the switch. In addition, the SDN controller configures a bit rate of the execution queue. For example, when the QoS parameter of the first service includes the MBR, the bit rate of the execution queue may be set to a value of the MBR included in the QoS parameter of the first service. When the QoS parameter of the first service includes the GBR, a bit rate of a queue with a high priority in the execution queue may be set to a value of the GBR included in the QoS parameter of the first service. When the QoS parameter of the first service includes the GBR and the MBR, a bit rate of the queue with a high priority in the execution queue may be set to a value of the GBR included in the QoS parameter of the first service, and a bit rate of a queue with a low-priority in the execution queue may be set to a value of the GBR included in the QoS parameter of the first service and a difference between the value of the GBR and a value of the MBR that is included in the QoS parameter of the first service.

In addition, that the SDN controller sends the quality of service flow table to the switch may specifically be that the SDN controller sends a Flow-mod message to the switch, where the Flow-mod message includes the quality of service flow table. Optionally, the SDN controller further sends a Packet-out message to the switch, to instruct the switch to forward a data packet of the first service.

Step S212. The switch receives the quality of service flow table sent by the SDN controller.

Step S213: The switch forwards the data packet of the first service based on the quality of service flow table.

Specifically, the switch forwards the data packet of the first service based on the QoS class indicated by the QoS class identifier in the quality of service flow table and a queue indicated by the identifier of the execution queue in the quality of service flow table.

For ease of understanding, the following separately uses an example in which the QoS of the first service requires the MBR and an example in which the QoS of the first service requires the GBR for description.

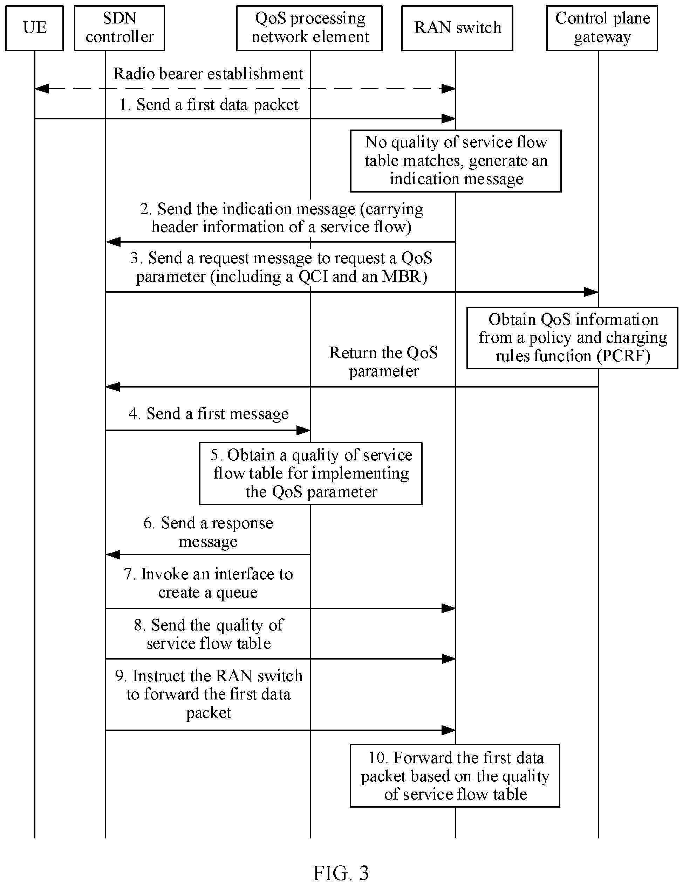

Case 1. The QoS of the first service requires the MBR. For a corresponding procedure as follows, refer to FIG. 3.

Step 1. After establishing a radio bearer with a RAN-side switch, UE sends a first data packet to the RAN-side switch. After receiving the first data packet, the RAN-side switch finds that no quality of service flow table matches the first data packet. In this case, the RAN-side switch generates a Packet-in message, where the Packet-in message includes header information of the first data packet.

Step 2. The RAN-side switch sends the Packet-in message to an SDN controller.

Step 3. The SDN controller sends a first request message to a control plane gateway to obtain a QoS parameter, such as a QCI and an MBR, of the first service flow to which the first data packet belongs. After receiving the first request message, the control plane gateway obtains the QoS parameter of the first service from a PCRF connected to the control plane gateway, and sends the QoS parameter of the first service to the SDN controller.

Step 4. The SDN controller sends a first message to a QoS processing network element, where the first message may carry header information (such as a source/destination address, a protocol type, and a port number), and a QoS parameter (such as QCI=2, and MBR=200 Mbps) of the first service. The first message may be used by the QoS processing network element to determine how to generate the quality of service flow table of the first service.

Step 5. After receiving the first message of the SDN controller, the QoS processing network element obtains a quality of service flow table and related configuration information that are required for implementing the QCI and the MBR parameters (where the quality of service flow table and the related configuration information may be preconfigured by a network administrator by using an external interface of the QoS processing network element).

For the QCI parameter, QCI features of the QoS may be implemented by extending a flow entry field of an OpenFlow protocol. For example, a new behavior, namely, a QCI value, is added to an action field (that is, an Action field), where the value is a value of the QCI. For example, if the value of QCI is defined as 2, the parameter may be set to QCI 2. In a forwarding plane switch, different QCI values correspond to different scheduling algorithms to meet performance indicator requirements. After a data packet that passes the RAN-side switch matches the quality of service flow table, a matching algorithm corresponding to the QCI value is executed. For example, if the source IP address of the header information of the first data packet is 101.224.112.10 and the destination IP address is 126.136.134.20, the generated quality of service flow table is shown in Table 2, and a QCI execution point is the RAN-side switch.

**Table 2**

| Match Field | | Processing Action |
|---|---|---|
| Source IP address | Target IP address | |
| 101.224.112.10 | 126.136.134.20 | QCI 2 |

For the MBR parameter, a service flow with a specified MBR parameter value may be forwarded to a specific queue (a maximum rate of the queue is set to the MBR) by using a feature of rate limitation on a data packet in the queue. For example, if the source IP address of the header information of the first data packet is 101.224.112.10 and the destination IP address is 126.136.134.20, the generated quality of service flow table is shown in Table 3, and an MBR execution point is the RAN-side switch.

**Table 3**

| Match Field | | Processing Action |
|---|---|---|
| Source IP address | Target IP address | |
| 101.224.112.10 | 126.136.134.20 | Set-Queue 5 |

After the two quality of service flow tables shown in Table 2 and Table 3 are generated, Table 2 and Table 3 may be further processed based on Rule 1 and Rule 2, and the quality of service flow table shown in Table 1 may be obtained after processing based on Rule 1 and Rule 2.

Then, the QoS processing network element detects whether there is one quality of service flow table on the RAN-side switch, and if there is more than one quality of service flow table on the RAN-side switch, flow tables need to be combined by using a multi-flow table. Because there is only one flow table (that is, Table 1) in this embodiment, no combination is required.

Step 6. The QoS processing network element sends a response message to the SDN controller, where the response message may include a match field and an action field of a final quality of service flow table, and the response message may further include execution point information and queue configuration information. The execution point information is used to indicate a node used to execute the quality of service flow table, and the queue configuration information is used to indicate a queue to be configured.

Step 7. The SDN controller creates a queue by using an interface based on the queue configuration information. For example, based on Table 1, a queue of which an identifier (ID) is 5 needs to be created, and a maximum rate of the queue is set to 200 Mbps (that is, a value of the MBR).

Step 8. The SDN controller sends the quality of service flow table to the RAN-side switch by using a Flow-mod message, where the quality of service flow table is shown in Table 1.

Step 9. The SDN controller instructs, by using a Packet-out message, the RAN-side switch to forward the first data packet.

Step 10. The RAN-side switch receives the quality of service flow table sent by the SDN controller, and forwards the first data packet based on the quality of service flow table.

It can be learned that the operation of combining the quality of service flow tables in step 5 can reduce a quantity of flow tables delivered to the forwarding plane switch, thereby reducing overheads of switch resources.

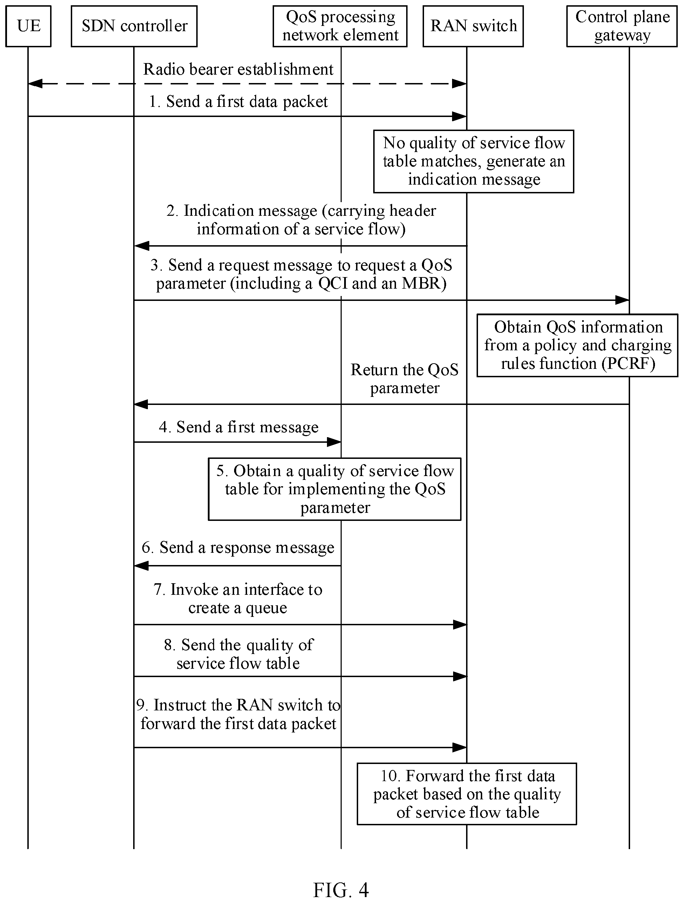

Case 2. The QoS of the first service requires the GBR. For a corresponding procedure as follows, refer to FIG. 4.

Step 1. After establishing a radio bearer with a RAN-side switch, UE sends a first data packet to the RAN-side switch. After receiving the first data packet, the RAN-side switch finds that no quality of service flow table matches the first data packet. In this case, the RAN-side switch generates a Packet-in message, where the Packet-in message includes header information of the first data packet.

Step 2. The RAN-side switch sends the Packet-in message to an SDN controller.

Step 3. The SDN controller sends a first request message to a control plane gateway to obtain a QoS parameter, such as a QCI and a GBR, of the first service flow to which the first data packet belongs. After receiving the first request message, the control plane gateway obtains the QoS parameter of the first service from a PCRF connected to the control plane gateway, and sends the QoS parameter of the first service to the SDN controller.

Step 4. The SDN controller sends a first message to a QoS processing network element, where the first message may carry header information (such as a source/destination address, a protocol type, and a port number), and a QoS parameter (such as QCI=2, and MBR=200 Mbps) of the first service. The first message may be used by the QoS processing network element to determine how to generate the quality of service flow table of the first service.

Step 5. After receiving the first message of the SDN controller, the QoS processing network element obtains a quality of service flow table and related configuration information that are required for implementing the QCI and the GBR parameters (where the quality of service flow table and the related configuration information may be preconfigured by a network administrator by using an external interface of the QoS processing network element).

For the QCI parameter, QCI features of the QoS may be implemented by extending a flow entry field of an OpenFlow protocol. For example, a new behavior, namely, a QCI value, is added to an action field (that is, an Action field), where the value is a value of the QCI. For example, if the value of QCI is defined as 2, the parameter may be set to QCI 2. In a forwarding plane switch, different QCI values correspond to different scheduling algorithms to meet performance indicator requirements. After a data packet that passes the RAN-side switch matches the quality of service flow table, a matching algorithm corresponding to the QCI value is executed. For example, if the source IP address of the header information of the first data packet is 101.224.112.10 and the destination IP address is 126.136.134.20, the generated quality of service flow table is shown in Table 2, and a QCI execution point is the RAN-side switch.

**Table 2**

| Match Field | | Processing Action |
|---|---|---|
| Source IP address | Target IP address | |
| 101.224.112.10 | 126.136.134.20 | QCI 2 |

The GBR parameter is implemented with reference to Meter table and multi-flow table methods. Quality of service flow tables generated for the GBR parameter are shown in Table i and Table i+1.

In Table i, a match field includes a source IP address and a destination IP address of the first data packet, and an action field (Action field) is set to a Meter id and Goto Table (i+1). id is an identifier of the meter. For example, if the identifier of the meter is defined as 3, the action field may be set to "Meter 3". In addition, in a Meter Band of the meter, a Band Type is set to DSCP Remark, and a Rate and a Burst are set to GBR values.

Table i+1 includes a first entry and a second entry, where a match field of the first entry includes the source IP address and the destination IP address of the first data packet, and further includes a DSCP field and a priority field. An action field (Action field) of the first entry is set to forwarding to a low-priority queue 2. A match field of the second entry is the same as the match field of the first entry, and an action field (Action field) is set to forwarding to a high-priority queue 7. A matching priority of the first entry is higher than a matching priority of the second entry.

After the quality of service flow tables shown in Table 2, Table i, and Table i+1 are generated, the entries are processed based on Rule 1 and Rule 2, and it is found that a condition for combining the quality of service flow tables described in Rule 2 is not met. Therefore, the several quality of service flow tables are combined by using a multi-flow table of the OpenFlow (using the goto table instruction). The combination result is shown in Table 0, Table i, and Table 1+1.

Step 6. The QoS processing network element sends a response message to the SDN controller, where the response message may include a match field and an action field of a final quality of service flow table, and the response message may further include execution point information and queue configuration information. The execution point information is used to indicate a node used to execute the quality of service flow table, and the queue configuration information is used to indicate a queue to be configured.

Step 7. The SDN controller creates a queue by using an interface based on the queue configuration information. For example, based on Table i+1, queues of which identifiers (ID) are 2 and 7 need to be created, and an expected rate of the queue of which an identifier is 2 is set to 200 Mbps (that is, a value of the GBR).

Step 8. The SDN controller sends the quality of service flow table to the RAN-side switch by using a Flow-mod message, where the quality of service flow table is a quality of service flow table obtained by concatenating the quality of service flow table shown in Table 0, the quality of service flow table shown in Table i, and the quality of service flow table shown in Table i+1.

Step 9. The SDN controller instructs, by using a Packet-out message, the RAN-side switch to forward the first data packet.

Step 10. The RAN-side switch receives the quality of service flow table sent by the SDN controller, and forwards the first data packet based on the quality of service flow table.

That is, by using an existing pipeline mechanism of the OpenFlow, quality of service flow tables of different QoS parameters are connected in the multi-flow table manner (by using the goto table instruction), so that QoS control processing is performed on a data packet based on the quality of service flow table in the OpenFlow pipeline, to implement a required QoS function.

In the method described in FIG. 2, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

The methods in the embodiments of the present invention are described above in detail, and apparatuses in embodiments of the present invention are provided below.

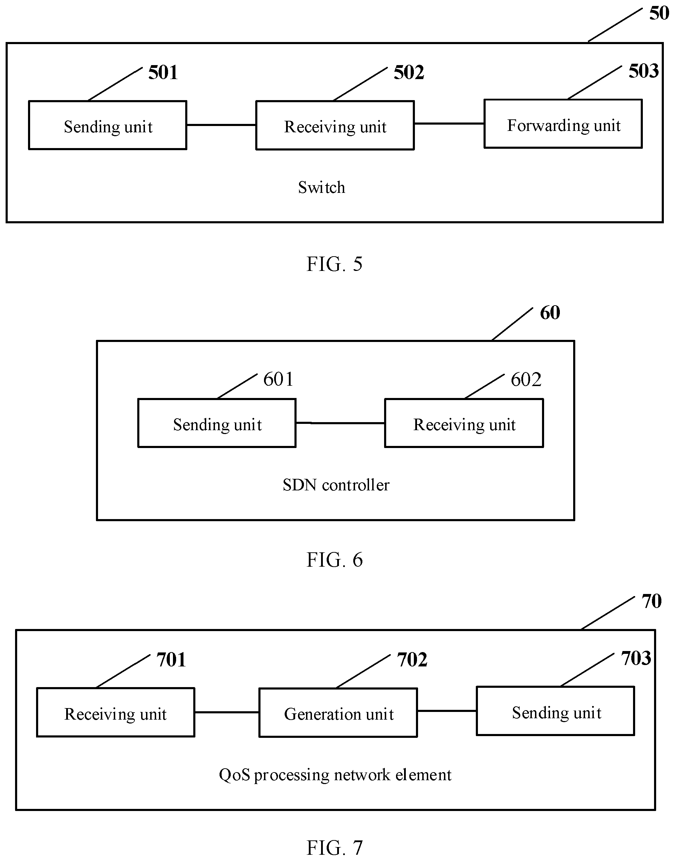

FIG. 5 is a schematic structural diagram of a switch 50 according to an embodiment of the present invention. The switch 50 may include a sending unit 501, a receiving unit 502, and a forwarding unit 503. The units are described below in detail.

The sending unit 501 sends header information of a first data packet to an SDN controller.

The receiving unit 502 receives a quality of service flow table sent by the SDN controller, where the quality of service flow table is used to indicate a QoS class of a first service to which the first data packet belongs and an execution queue of the first service, and a bit rate upper limit is set for the execution queue of the first service.

The forwarding unit 503 forwards a data packet of the first service based on a QoS class identifier and the execution queue.

It should be noted that for implementation of each unit, correspondingly refer to the corresponding descriptions in the method embodiment shown in FIG. 2.

In the switch 50 described in FIG. 5, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

FIG. 6 is a schematic structural diagram of an SDN controller 60 according to an embodiment of the present invention. The SDN controller 60 may include a receiving unit 601 and a sending unit 602. The units are described below in detail.

The sending unit 602 is configured to send a first request message to a control plane gateway based on header information of a first data packet sent by a switch, to request a quality of service QoS parameter of a first service to which the first data packet belongs, where the QoS parameter includes a quality of service class identifier QCI and bit rate information.

The receiving unit 601 is configured to receive the QoS parameter that is required by the first service and that is sent by the control plane gateway.

The sending unit 602 is further configured to send the QoS parameter required by the first service to a QoS processing network element, so that the QoS processing network element generates a quality of service flow table, where the quality of service flow table is used to indicate a QoS class of the first service and an execution queue of the first service, and a bit rate upper limit is set for the execution queue of the first service.

The receiving unit 601 is further configured to receive the quality of service flow table sent by the QoS processing network element.

The sending unit 602 is further configured to: create the execution queue and send the quality of service flow table to the switch, so that the switch forwards a data packet of the first service based on the quality of service flow table.

It should be noted that for implementation of each unit, correspondingly refer to the corresponding descriptions in the method embodiment shown in FIG. 2.

In the SDN controller 60 described in FIG. 6, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

FIG. 7 is a schematic structural diagram of a QoS processing network element 70 according to an embodiment of the present invention. The QoS processing network element 70 may include a receiving unit 701, a generation unit 702, and a sending unit 703. The units are described below in detail.

The receiving unit 701 is configured to receive a quality of service QoS parameter that is required by a first service and that is sent by an SDN controller, where the QoS parameter includes a quality of service class identifier QCI and bit rate information.

The generation unit 702 is configured to generate a quality of service flow table based on the QoS parameter, where the quality of service flow table is used to indicate a QoS class of the first service and an execution queue of the first service, and a bit rate upper limit is set for the execution queue of the first service.

The sending unit 703 is configured to send the quality of service flow table to the SDN controller, so that the SDN controller forwards the quality of service flow table to a switch, where the quality of service flow table is used by the switch to forward a data packet of the first service based on the quality of service flow table.

It should be noted that for implementation of each unit, correspondingly refer to the corresponding descriptions in the method embodiment shown in FIG. 2.

In the QoS processing network element 70 described in FIG. 7, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

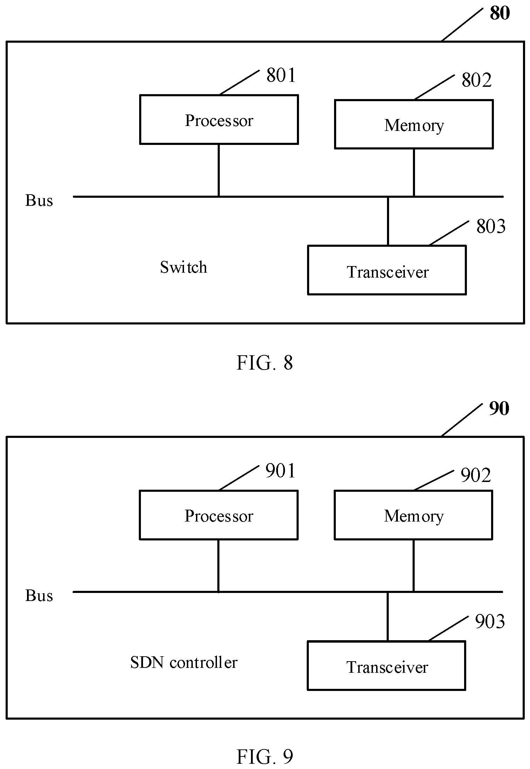

FIG. 8 shows a switch 80 according to an embodiment of the present invention. The switch 80 includes a processor 801, a memory 802, and a transceiver 803. The processor 801, the memory 802, and the transceiver 803 are connected to each other by using a bus.

The memory 802 includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). The memory 802 is configured to store a related instruction and related data. The transceiver 803 is configured to receive and send data.

The processor 801 may be one or more central processing units (central processing unit, CPU). When the processor 801 is one CPU, the CPU may be a single-core CPU, or may be a multi-core CPU.

The processor 801 in the switch 80 is configured to read program code stored in the memory 802, to perform the following operations:
sending, by using the transceiver, header information of a first data packet to an SDN controller;
receiving, by using the transceiver, a quality of service flow table sent by the SDN controller, where the quality of service flow table is used to indicate a QoS class of a first service to which the first data packet belongs and an execution queue of the first service, and a bit rate upper limit is set for the execution queue of the first service; and
forwarding a data packet of the first service based on the QoS class identifier and the execution queue.

It should be noted that for implementation of each operation, correspondingly refer to the corresponding descriptions in the method embodiment shown in FIG. 2.

In the switch 80 described in FIG. 8, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

FIG. 9 shows an SDN controller 90 according to an embodiment of the present invention. The SDN controller 90 includes a processor 901, a memory 902, and a transceiver 903. The processor 901, the memory 902, and the transceiver 903 are connected to each other by using a bus.

The memory 902 includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). The memory 902 is configured to store a related instruction and related data. The transceiver 903 is configured to receive and send data.

The processor 901 may be one or more central processing units (central processing unit, CPU). When the processor 901 is one CPU, the CPU may be a single-core CPU, or may be a multi-core CPU.

The processor 901 in the SDN controller 90 is configured to read program code stored in the memory 902, to perform the following operations:
sending, by using the transceiver, a first request message to a control plane gateway based on header information of a first data packet sent by a switch, to request a quality of service QoS parameter of a first service to which the first data packet belongs, where the QoS parameter includes a quality of service class identifier QCI and bit rate information;
receiving, by using the transceiver, the QoS parameter that is required by the first service and that is sent by the control plane gateway;
sending, by using the transceiver, the QoS parameter required by the first service to a QoS processing network element, so that the QoS processing network element generates a quality of service flow table, where the quality of service flow table is used to indicate a QoS class of the first service and an execution queue of the first service, and a bit rate upper limit is set for the execution queue of the first service;
receiving, by using the transceiver, the quality of service flow table sent by the QoS processing network element; and
creating the execution queue and sending the quality of service flow table to the switch, so that the switch forwards a data packet of the first service based on the quality of service flow table.

It should be noted that for implementation of each operation, correspondingly refer to the corresponding descriptions in the method embodiment shown in FIG. 2.

In the SDN controller 90 described in FIG. 9, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

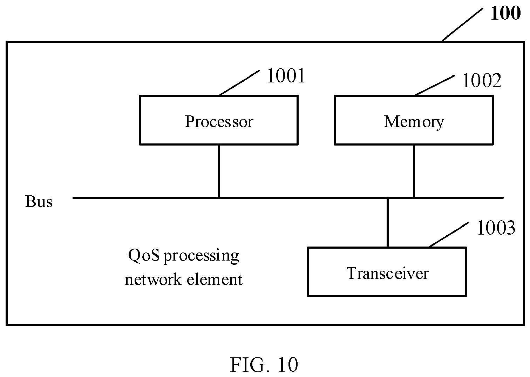

FIG. 10 shows a QoS processing network element 100 according to an embodiment of the present invention. The QoS processing network element 100 includes a processor 1001, a memory 1002, and a transceiver 1003. The processor 1001, the memory 1002, and the transceiver 1003 are connected to each other by using a bus.

The memory 1002 includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). The memory 1002 is configured to store a related instruction and related data. The transceiver 1003 is configured to receive and send data.

The processor 1001 may be one or more central processing units (central processing unit, CPU). When the processor 1001 is one CPU, the CPU may be a single-core CPU, or may be a multi-core CPU.

The processor 1001 in the QoS processing network element 100 is configured to read program code stored in the memory 1002, to perform the following operations:
receiving, by using the transceiver, a quality of service QoS parameter that is required by a first service and that is sent by an SDN controller, where the QoS parameter includes a quality of service class identifier QCI and bit rate information;
generating a quality of service flow table based on the QoS parameter, where the quality of service flow table is used to indicate a QoS class of the first service and an execution queue of the first service, and a bit rate upper limit is set for the execution queue of the first service; and
sending, by using the transceiver, the quality of service flow table to the SDN controller, so that the SDN controller forwards the quality of service flow table to a switch, where the quality of service flow table is used by the switch to forward a data packet of the first service based on the quality of service flow table.

It should be noted that for implementation of each operation, correspondingly refer to the corresponding descriptions in the method embodiment shown in FIG. 2.

In the QoS processing network element 100 described in FIG. 10, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

An embodiment of the present invention further provides a computer-readable storage medium. The computer-readable storage medium stores an instruction. When the instruction runs on a processor, the method procedure shown in FIG. 2 is implemented.

An embodiment of the present invention further provides a computer program product. When the computer program product runs on a processor, the method procedure shown in FIG. 2 is implemented.

In conclusion, in the embodiments of the present invention, a plurality of QoS parameters including a QCI, an MBR, and a GBR are implemented based on OpenFlow. The used method enhances the existing OpenFlow technology to some extent, and an S5 bearer and an S8 bearer do not need to be established as in the prior art. Therefore, a procedure is simpler than that in the prior art, and implementation efficiency is higher.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium includes: any medium that can store program code, such as a ROM or a random access memory RAM, a magnetic disk or an optical disc.

## Claims

1. A quality of service QoS control method, wherein the method is implemented based on an OpenFlow protocol and comprises:
sending, by a switch, header information of a first data packet to an SDN controller;
receiving, by the switch, a quality of service flow table sent by the SDN controller, wherein the quality of service flow table is used to indicate a QoS class of a first service to which the first data packet belongs and an execution queue of the first service, and a bit rate upper limit is set for the execution queue of the first service; and
forwarding, by the switch, a data packet of the first service based on a QoS class identifier and the execution queue.

2. The method according to claim 1, wherein
if QoS of the first service requires a maximum bit rate MBR, a bit rate comprises the MBR; a match field of the quality of service flow table comprises a source address and a destination address of the header information, and an action field of the quality of service flow table comprises the QoS class identifier QCI of the first service and an identifier of the execution queue of the first service.

3. The method according to claim 2, wherein
if the QoS of the first service requires a guaranteed bit rate GBR, the bit rate comprises the GBR; the quality of service flow table comprises a multi-flow table that consists of a first flow table, a second flow table, and a third flow table, wherein a match field of the first flow table comprises the source address and the destination address of the header information, and an action field of the first flow table comprises the QoS class identifier QCI of the first service; a match field of the second flow table comprises the source address and the destination address of the header information, and an action field of the second flow table comprises a peer meter identifier; and a match field of the third flow table comprises an execution priority, a differentiated services code point DSCP, and the source address and the destination address of the header information, and an action field of the third flow table comprises the identifier of the execution queue of the first service.

4. The method according to claim 3, wherein
the third flow table comprises a first entry and a second entry, wherein a priority recorded in the first entry is higher than a priority recorded in the second entry, a DSCP value recorded in the second entry is a DSCP value other than a DSCP value recorded in the first entry, both the first entry and the second entry record the source address and the destination address of the header information, an execution queue identifier in the first entry is different from an execution queue identifier in the second entry, and a bit rate upper limit of an execution queue represented by the execution queue identifier in the first entry is set to the GBR.

5. The method according to claim 4, wherein
if the QoS of the first service requires both the GBR and the MBR, a bit rate upper limit of an execution queue represented by the execution queue identifier in the second entry is set to a difference between the MBR and the GBR.

6. A quality of service QoS control method, wherein the method is implemented based on an OpenFlow protocol and comprises:
sending, by an SDN controller, a first request message to a control plane gateway based on header information of a first data packet sent by a switch, to request a quality of service QoS parameter of a first service to which the first data packet belongs, wherein the QoS parameter comprises a quality of service class identifier QCI and bit rate information;
receiving, by the SDN controller, the QoS parameter that is required by the first service and that is sent by the control plane gateway;
sending, by the SDN controller, the QoS parameter required by the first service to a QoS processing network element, so that the QoS processing network element generates a quality of service flow table, wherein the quality of service flow table is used to indicate a QoS class of the first service and an execution queue of the first service, and a bit rate upper limit is set for the execution queue of the first service;
receiving, by the SDN controller, the quality of service flow table sent by the QoS processing network element; and
creating, by the SDN controller, the execution queue, and sending the quality of service flow table to the switch, so that the switch forwards a data packet of the first service based on the quality of service flow table.

7. The method according to claim 6, wherein
if QoS of the first service requires a maximum bit rate MBR, a bit rate comprises the MBR; a match field of the quality of service flow table comprises a source address and a destination address of the header information, and an action field of the quality of service flow table comprises the QoS class identifier QCI of the first service and an identifier of the execution queue of the first service.

8. The method according to claim 7, wherein
if the QoS of the first service requires a guaranteed bit rate GBR, the bit rate comprises the GBR, and the quality of service flow table comprises a multi-flow table that consists of a first flow table, a second flow table, and a third flow table, wherein a match field of the first flow table comprises the source address and the destination address of the header information, and an action field of the first flow table comprises the QoS class identifier QCI of the first service; a match field of the second flow table comprises the source address and the destination address of the header information, and an action field of the second flow table comprises a peer meter identifier; and a match field of the third flow table comprises an execution priority, a DSCP, and the source address and the destination address of the header information, and an action field of the third flow table comprises the identifier of the execution queue of the first service.

9. The method according to claim 8, wherein
the third flow table comprises a first entry and a second entry, wherein a priority recorded in the first entry is higher than a priority recorded in the second entry, a DSCP value recorded in the second entry is a differentiated services code point DSCP value other than a DSCP value recorded in the first entry, and both the first entry and the second entry record the source address and the destination address of the header information, an execution queue identifier in the first entry is different from an execution queue identifier in the second entry, and a bit rate upper limit of an execution queue represented by the execution queue identifier in the first entry is set to the GBR.

10. The method according to claim 9, wherein
if the QoS of the first service requires both the GBR and the MBR, a bit rate upper limit of an execution queue represented by the execution queue identifier in the second entry is set to a difference between the MBR and the GBR.

11. A quality of service QoS control method, wherein the method is implemented based on an OpenFlow protocol and comprises:
receiving, by a QoS processing network element, a quality of service QoS parameter that is required by a first service and that is sent by an SDN controller, wherein the QoS parameter comprises a quality of service class identifier QCI and bit rate information;
generating, by the QoS processing network element, a quality of service flow table based on the QoS parameter, wherein the quality of service flow table is used to indicate a QoS class of the first service and an execution queue of the first service, and a bit rate upper limit is set for the execution queue of the first service; and
sending, by the QoS processing network element, the quality of service flow table to the SDN controller, so that the SDN controller forwards the quality of service flow table to a switch, wherein the quality of service flow table is used by the switch to forward a data packet of the first service based on the quality of service flow table.

12. The method according to claim 11, wherein
if QoS of the first service requires a maximum bit rate MBR, a bit rate comprises the MBR; a match field of the quality of service flow table comprises a source address and a destination address of the header information, and an action field of the quality of service flow table comprises the QoS class identifier QCI of the first service and an identifier of the execution queue of the first service.

13. The method according to claim 12, wherein
if the QoS of the first service requires a guaranteed bit rate GBR, the bit rate comprises the GBR; the quality of service flow table comprises a multi-flow table that consists of a first flow table, a second flow table, and a third flow table, wherein a match field of the first flow table comprises the source address and the destination address of the header information, and an action field of the first flow table comprises the QoS class identifier QCI of the first service; a match field of the second flow table comprises the source address and the destination address of the header information, and an action field of the second flow table comprises a peer meter identifier; and a match field of the third flow table comprises an execution priority, a DSCP, and the source address and the destination address of the header information, and an action field of the third flow table comprises the identifier of the execution queue of the first service.

14. The method according to claim 13, wherein
the third flow table comprises a first entry and a second entry, wherein a priority recorded in the first entry is higher than a priority recorded in the second entry, a DSCP value recorded in the second entry is a differentiated services code point DSCP value other than a DSCP value recorded in the first entry, both the first entry and the second entry record the source address and the destination address of the header information, an execution queue identifier in the first entry is different from an execution queue identifier in the second entry, and a bit rate upper limit of an execution queue represented by the execution queue identifier in the first entry is set to the GBR.

15. The method according to claim 14, wherein
if the QoS of the first service requires both the GBR and the MBR, a bit rate upper limit of an execution queue represented by the execution queue identifier in the second entry is set to a difference between the MBR and the GBR.

16. A switch, wherein the switch comprises a processor and a memory, the memory is configured to store a program instruction, and the processor is configured to invoke the program instruction to perform the method according to any one of claims 1 to 5.

17. An SDN controller, wherein the SDN controller comprises a processor and a memory, the memory is configured to store a program instruction, and the processor is configured to invoke the program instruction to perform the method according to any one of claims 6 to 10.

18. A QoS processing network element, wherein the QoS processing network element comprises a processor and a memory, the memory is configured to store a program instruction, and the processor is configured to invoke the program instruction to perform the method according to any one of claims 11 to 15.

19. A computer-readable storage medium, wherein the computer-readable storage medium is configured to store a program instruction, and when the program instruction is executed by a processor, the method according to any one of claims 1 to 15 is implemented.
